# EUROPÄISCHE PATENTANMELDUNG

(11) **EP 0 658 726 A2**
(43) Veröffentlichungstag der Anmeldung: **21.06.1995**
(21) Anmeldenummer: 94119118.1
(22) Anmeldetag: 05.12.1994
(51) Int. Cl.: F24D 13/02, H05B 3/26

(54) **Heizköper, bestehend aus einem Grundmaterial mit sehr geringer Wärmeleitfähigkeit, mindestens einem vorzugsweise elektrischen Heizelement und Materialien zur Wärmedämmung und Wärmestrahlungsreflexion**

(30) Priorität: 15.12.1993 DE 9319245 U
(71) Anmelder: Bräuer, Dietmar, D-78050 VS-Villingen (DE); Naber, Dieter, D-78050 VS-Villingen (DE)
(72) Erfinder: Bräuer, Dietmar, D-78050 VS-Villingen (DE); Naber, Dieter, D-78050 VS-Villingen (DE)
(74) Vertreter: Zipse & Habersack

(57) **Zusammenfassung**

Die Erfindung betrifft einen Heizkörper, bestehend aus einem plattenförmigen Grundmaterial mit sehr geringer Wärmeleitfähigkeit, auf welches mindestens ein elektrisches Heizelement aufgebracht ist, auf welches eine wärmereflektierende Folie aufgebracht ist, auf welcher sich eine Wärmedämmatte (5) befindet. Der Heizkörper ist **dadurch gekennzeichnet,** daß das Grundmaterial (1) aus Naturstein, Schamotte, Keramik od. dgl. besteht, auf welches die elektrische Heizfolie (2) aufgebracht ist, die mit einer Kunststoffolie (4) mit aufgebrachter Metallschicht als fester Bestandteil der Heizfolie verbunden ist, und daß das Grundmaterial mit einem Umleimer (6) aus dem gleichen Werkstoff umgeben ist, der eine natürliche Wärmebarriere gegen eine unnötige Erwärmung der auf der Rückseite angebrachten Regelungselektronik (3) und des Bereichs der Bedienungselemente bildet.

## Beschreibung

Es sind bereits die verschiedensten Heizkörper bekanntgewordenen, bei denen mittels elektrischer Heizelemente ein Grundkörper, beispielsweise aus Keramik, Schamott od. dgl., erwärmt wird, der dann seinerseits die Wärmeenergie durch Strahlung an die Umgebung abgibt. Dabei erfolgt die Strahlungsabgabe in alle Richtungen, so daß beispielsweise ein Heizkörper, der sich in der Nähe einer Wand befindet, diese mit der Zeit so stark erwärmt, daß sie beschädigt wird.

In der DE-U-91 02 467 ist eine Heizvorrichtung mit einem im wesentlichen plattenförmigen Strahlungskörper beschrieben, dessen Frontseite zur Abgabe einer Wärmestrahlung vorgesehen ist und an dessen der Frontseite gegenüberliegenden Rückseite ein elektrisches Heizelement vorgesehen ist. Dieses Heizelement ist dadurch gekennzeichnet, daß das elektrische Heizelement als dünne Platte ausgebildet ist, welche aus Metall bestehende elektrische Heizleiter aufweist, und daß das plattenförmige Heizelement mit der Rückseite des Strahlungskörpers durch eine Klebeschicht verbunden ist. Auf der dem Strahlungskörper abgewandeten Seite des Heizelements ist eine wärmeisolierende Schicht aufgeklebt, die aus Mineralwolle besteht. Bei dieser Heizvorrichtung befindet sich die aus Aluminiumblech bestehende, als Strahlungskörper wirkende Verkleidung im wesentichen Abstand vom plattenförmigen Heizelement und bildet mit diesem keine Einheit.

In der DE-A-39 32 101 ist ein Flachheizkörper mit einer Frontplatte aus Naturstein beschrieben, bei dem eine Rückstrahlungsplatte in großem Abstand vom Heizkörper angeordnet ist, wodurch sich Strahlungsverluste ergeben können.

In der WO 93/23969 ist ebenfalls eine Heizvorrichtung mit einem im wesentlichen plattenförmigen Strahlungskörper beschrieben, bei dem eine zweite Fläche des Strahlungskörpers sowie die Heizeinrichtung mit einer Kunststoff-Hartschaumschicht bedeckt sind, die unmittelbar auf die zweite Fläche des Strahlungskörpers aufgeschäumt ist. Auch bei dieser Anordnung befindet sich keine Rückstrahlungsplatte in unmittelbarer Nähe der Heizplatte.

Der vorliegenden Erfindung liegt die Aufgabe zugrunde, einen Heizkörper der eingangs genannten Art zu schaffen, der die Wärmestrahlung gezielt in eine vorgegebene Richtung bringt, so daß eine Beschädigung der Raumwand verhindert wird.

Zur Lösung der gestellten Aufgabe wird ein Heizkörper, bestehend aus einem plattenförmigen Grundmaterial mit sehr geringer Wärmeleitfähigkeit, auf welches mindestens ein elektrisches Heizelement aufgebracht ist, auf welches eine wärmereflektierende Folie aufgebracht ist, auf welcher sich eine Wärmedämmatte befindet, vorgeschlagen, welcher dadurch gekennzeichnet ist, daß das Grundmaterial aus Naturstein, Schamotte, Keramik od. dgl. besteht, auf welches die elektrische Heizfolie aufgebracht ist, die mit einer Kunststoffolie mit aufgebrachter Metallschicht als fester Bestandteil der Heizfolie verbunden ist, und daß das Grundmaterial mit einem Umleimer aus dem gleichen Werkstoff umgeben ist, der eine natürliche Wärmebarriere gegen eine unnötige Erwärmung der auf der Rückseite angebrachten Regelungselektronik und des Bereichs der Bedienungselemente bildet.

Der Heizkörper gemäß der Erfindung weist den wesentlichen Vorteil auf, daß durch die Verbindung der Heizfolie mit einer Kunststoffolie mit aufgebrachter Metallschicht zu einer Einheit ein außerordentlich gutes Strahlungselement geschaffen wird, mit dem durch die dichte und innige Verbindung der Rückstrahlkunststoffolie mit der Heizfolie ein außerordentlich gezielter Strahlungsverlauf erreicht wird. Durch den Umleimer, der aus dem gleichen Werkstoff wie das Grundmaterial besteht, wird somit eine natürliche Wärmebarriere gegen eine unnötige Erwärmung erzielt, so daß die auf der Rückseite angebrachte Regelungseleketronik nicht beeinträchtigt wird.

Ein weiterer wesentlicher Vorteil des Heizkörpers gemäß der Erfindung besteht darin, daß durch die besondere Anordnung der Heizflächen, der wärmereflektierenden Folien und der wärmedämmenden Matte auf dem Grundmaterial in Verbindung mit dem erfindungsgemäß ausgebildeten Heizelement mit wärmestrahlungsreflektierender Folie erreicht wird, daß eine Wärmeabgabe praktisch ausschließlich durch Wärmestrahlung erfolgt, und zwar in einer gezielten Richtung.

Gemäß einer besonderen Ausführungsform sind beim Heizkörper nach der Erfindung die mit der Metallschicht versehene Kunststoffolie und die Wärmedämmatte in Sandwichweise und in Mehrfachanordnung auf der Heizfolie aufgebracht. Dadurch wird erreicht, daß eine nochmalige Verbesserung der Strahlungseigenschaften in eine Richtung erzielt wird.

Anhand der Zeichnung soll am Beispiel einer bevorzugten Ausführungsform der Heizkörper gemäß der Erfindung näher erläutert werden.

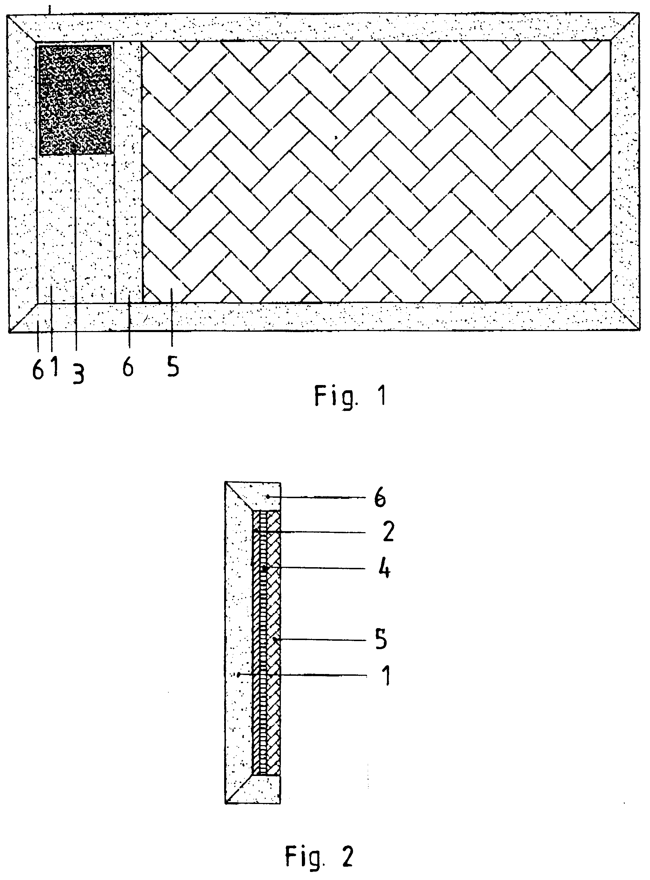

In der Zeichnung zeigen
- Fig. 1: eine Rückansicht und
- Fig. 2: einen Schnitt durch einen Heizkörper gemäß der Erfindung.

Wie sich aus den Figuren der Zeichnung ergibt, besteht der Heizkörper aus einer rechteckförmigen Platte oder einem rechteckförmigen Körper 1 aus einem Material mit sehr geringer Wärmeleitfähigkeit, beispielsweise Naturstein, Schamott od. dgl. Auf die rückseitige Fläche der Platte 1 ist eine elektrische Heizfolie 2 aufgebracht, die beispielsweise mittels einer an der Rückseite vorgesehenen Regelungselektronik 3 angesteuert werden kann. Auf die Heizfolie 2 ist eine wärmestrahlungsreflektierende Folie 4, die beispielsweise eine Kunststoffolie mit aufgebrachter Metallschicht sein kann, aufgebracht. Auf die Folie 4 ist in Sandwichweise eine Wärmedämmplatte 5 aufgebracht. Diese Ausführung kann auch zur noch besseren Wärmedämmung und -rückstrahlung in Mehrfachanordnung vorgesehen sein.

Das ganze ist mit einem Umleimer 6 umgeben, der aus dem gleichen Material wie der Körper bzw. die Platte 1 besteht. Es hat sich gezeigt, daß durch diesen Umleimer durch die damit natürlich geschaffene Wärmebarriere eine noch bessere Wirkung des erfindungsgemäßen Heizkörpers erzielt wird. Die Wärmestrahlung und der Wärmetransport werden durch die sandwichartige Anordnung von wärmestrahlungsreflektierenden und wärmedämmenden Materialien in die rückwärte Richtung fast völlig unterdrückt. Der Wärmetransport in die anderen Richtungen wird durch den Umleimer 6, der ebenfalls aus einem schlecht wärmeleitenden Material besteht, unterbunden. Durch die damit geschaffene, natürliche Wärmebarriere wird auch eine unnötige Erwärmung der Regelelektronik 3 und des Bereichs der Bedienungselemente unterbunden.

Mit dem Heizkörper gemäß der Erfindung können auch Öfen, insbesondere Kachelöfen, und Kamine, Heizwände, Heizdecken od. dgl. aufgebaut werden.

## Patentansprüche

1. Heizkörper, bestehend aus einem plattenförmigen Grundmaterial mit sehr geringer Wärmeleitfähigkeit, auf welches mindestens ein elektrisches Heizelement aufgebracht ist, auf welches eine wärmereflektierende Folie aufgebracht ist, auf welcher sich eine Wärmedämmatte (5) befindet, **dadurch gekennzeichnet,** daß das Grundmaterial (1) aus Naturstein, Schamotte, Keramik od. dgl. besteht, auf welches die elektrische Heizfolie (2) aufgebracht ist, die mit einer Kunststoffolie (4) mit aufgebrachter Metallschicht als fester Bestandteil der Heizfolie verbunden ist, und daß das Grundmaterial mit einem Umleimer (6) aus dem gleichen Werkstoff umgeben ist, der eine natürliche Wärmebarriere gegen eine unnötige Erwärmung der auf der Rückseite angebrachten Regelungselektronik (3) und des Bereichs der Bedienungselemente bildet.

2. Heizkörper nach Anspruch 1, **dadurch gekennzeichnet,** daß die mit der Metallschicht versehene Kunststoffolie (4) und die Wärmedämmatte (5) in Sandwichweise und in Mehrfachanordnung auf der Heizfolie (2) aufgebracht sind.
